# EUROPEAN PATENT SPECIFICATION

(11) **EP 1 243 866 B1**
(45) Date of publication and mention of the grant of the patent: **08.12.2004**
(21) Application number: 02003973.1
(22) Date of filing: 22.02.2002
(51) Int. Cl.: F24H 1/40

(54) **Heat exchanger for a condensation boiler**
Wärmetauscher für einen Brennwertkessel
Echangeur de chaleur pour une chaudière à condensation

(30) Priority: 23.03.2001 IT PR010024
(43) Date of publication of application: 25.09.2002
(73) Proprietor: Immergas S.p.A., 42041 Brescello (Reggio Emilia) (IT)
(72) Inventor: Bianchini, Claudio, 42041 Brescello (Reggio Emilia) (IT); Maini, Massimo, 42049 Sant'Ilario d'Enza (Reggio Emilia) (IT); Lovascio, Nicola, 42100 Reggio Emilia (IT); Rastelli, Raffaello, 43058 Sorbolo (Parma) (IT)
(74) Representative: Gotra, Stefano

(56) References cited:
- EP-A- 0 618 410
- EP-A- 0 687 870
- DE-A- 3 611 392
- DE-A- 19 802 426
- DE-U- 29 808 169
- GB-A- 1 008 513
- US-A- 5 697 435

## Description

The present invention relates to a heat exchanger suitable for a condensation boiler.

As is well known, condensation boilers exploit both the heat that develops as a result of combustion and the latent heat of condensation which is contained in the combustion fumes and which, in traditional boilers, would be lost through the stack without being exploited.

The heat contained in the fumes is generally recovered through heat exchangers, of different materials and forms, in which the fumes flow against a plurality of pipes through which flows the water of a heating plant. The quantity of condensation heat that is recovered depends mainly on the delivery and return temperature of the water of the heating plant.

While condensation boilers comprising known heat exchangers do allow to recover the heat of the fumes, they nonetheless have some drawbacks.

In particular, the pipes must be mutually connected to provide a continuous path for the water and such connection is complex, bulky, and costly. Moreover, the connection is fixed or in any case difficult to modify in order to change the path followed by the water inside the heat exchanger.

European Patent EP 0687870 discloses a heat exchanger of the kind described above, in which the pipes are made of stainless steel with a thickness of 0.5±0.2 mm and arranged in such a way that in the fume region their mutual distances are 1.0±0.5 mm and they are superposed adjacent or offset, welded or brazed, in such a way as to protect the lateral walls from the heat of the burner.

The side walls are constituted by a complex superposition of pipes having circular cross section. DE 198 02 426 shows a water heater having a combustion chamber in a water-cooled shaft, with an annular air gap between its bottom edge and the top edge of a heat conductor. There is a flow gap for combustion gases between at least one side, preferably both sides, of the heat conductor (32) and a water-cooled wall region of the shaft.

The heat conductor may be formed from a pack of plates with water-carrying tubes (36) passing through it. The heat exchanger of this document comprises substantially oval cross section pipes, defining the lateral walls of a combustion chamber. A drawback of this construction consists in the loss of heat produced in the neck-in between the pipes which reduces the efficiency of the heat exchanger.

The aim of the present invention is to eliminate the aforesaid drawbacks making available a heat exchanger in a condensation boiler in which the walls of the combustion chamber can be obtained in an extremely simple and economical manner, without having to superpose a plurality of pipes with circular cross section as in the prior art.

A further aim is that the pipes can be mutually connected in an easy, quick and versatile manner to enable to change the path followed by the water inside the heat exchanger.

A further aim is to increase the heat exchange surface of the heat exchanger.

Said aims are fully achieved by the heat exchanger of the present invention, which is characterised by the content of the claims set out below and in particular in that it comprises a first single pipe (8a) having substantially rectangular or oval cross section and defining a first lateral wall of a combustion chamber and a second single pipe (8a) opposite to the first pipe and having substantially rectangular or oval cross section and defining a second lateral wall of a combustion chamber, said second wall being opposite to the first lateral wall.

Said pipes are preferably obtained by welding two symmetrical halves in correspondence with the short sides of the rectangular cross section and are provided with stiffening protuberances or recesses.

The exchanger can also comprise at least two covers mounted at the end of the plurality of pipes and provided with dividing walls that realise connecting chambers between the pipes and define the conformation of the water flow path.

This and other features shall become more readily apparent from the following description of a preferred embodiment illustrated, purely by way of non limiting example, in the accompanying drawing tables, in which:
- Figure 1 shows a partially sectioned lateral view of a condensation boiler comprising a heat exchanger according to the present invention;
- Figure 2 shows a partially sectioned front view of the boiler of Figure 1;
- Figures 3 and 4 show respectively the left and right terminal plates or covers;
- Figure 5 shows section A-A of the cover of Figure 7;
- Figures 6, 7 and 8 show three different views of a finning of the pipes, in particular Figure 7 is section B-B of Figure 10;
- Figures 9 and 10 show two perspective views, from two different angles, of the heat exchanger.
- Figures 11 and 12 show the heat exchanger from the side of the two terminal plates, corresponding respectively to Figures 3 and 4 in an embodiment variation;
- Figure 13 shows section C-C of Figure 15;
- Figures 14, 15 and 16 show respectively a perspective view, a side view and an enlarged view of a detail of the protuberance or recess, of particular conduits with rectangular cross section;
- Figure 17 shows a perspective view of a diffuser.

With reference to the Figures, the number 1 globally indicates a condensation boiler comprising a fan 2 which, by means of its vacuum, creates a mixture between combustible gas and air through the Venturi effect. This mixture subsequently moves to a burner 3 which projects into a combustion chamber 4.

The fumes that are generated from the combustion flow through a heat exchanger 5, giving up heat and possibly condensing in the lower portion of the heat exchanger where a condensation discharge 6 is provided. Subsequently, the fumes are removed through a stack 7.

The exchanger 5 is provided with a plurality of pipes 8, preferably made of pure aluminium and with a thickness of 0.8 mm to 2 mm, distributed in two superposed blocks, mutually connected in series. The pipes 8 define a path for the flow of the water coming from a heating plant; said path develops inside the heat exchanger between a return section 10 from the heating plant and a delivery section 11 to the heating plant.

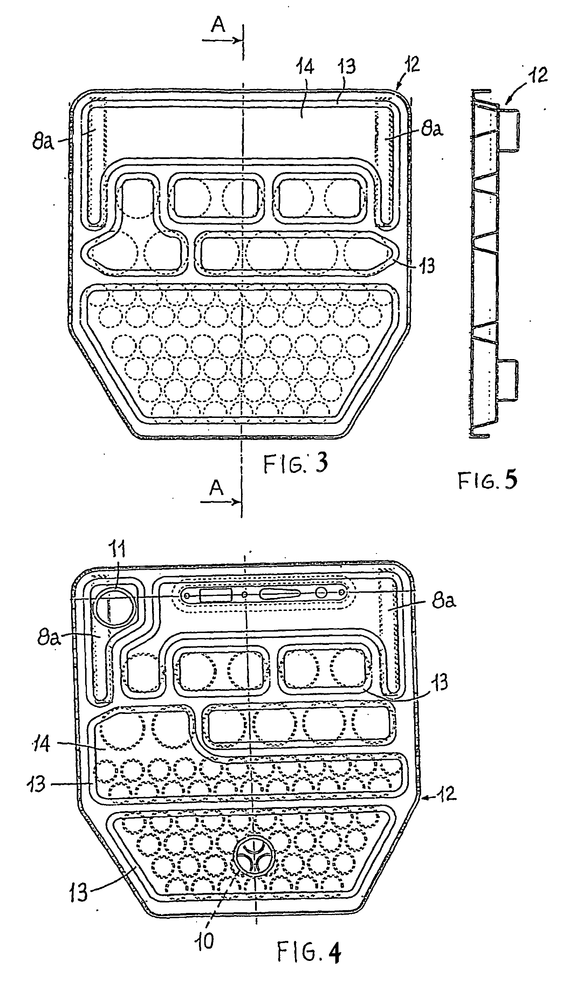

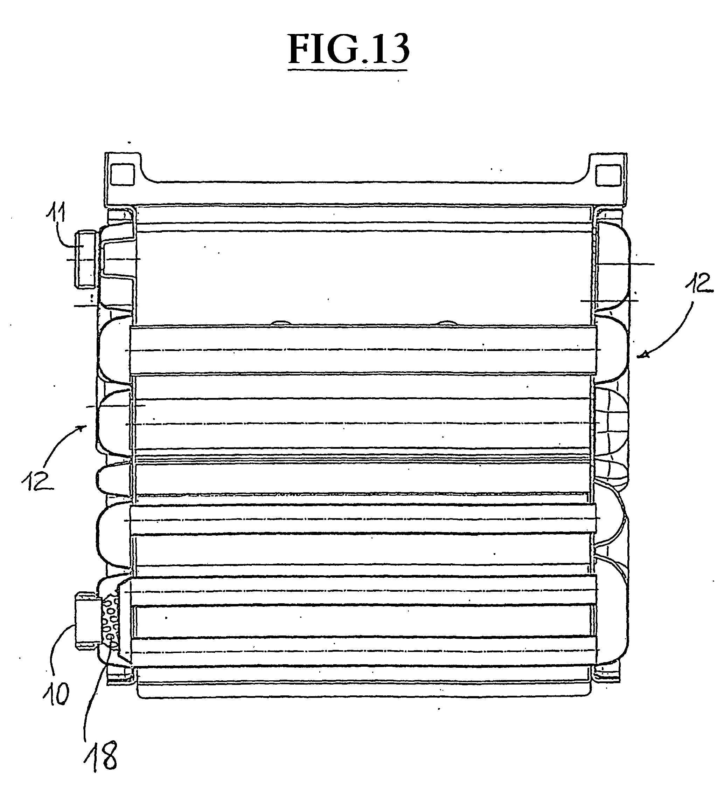

The heat exchanger 5 originally comprises at least a cover 12 (two in the examples shown in Figures 3, 4 and 13 mounted at an end of the plurality of pipes 8. Originally, the covers 12 are internally provided with a labyrinth, constituted by dividing walls 13 (and not simple gaskets as in the prior art) that realise connecting chambers 14 between the pipes and that as a consequence define the conformation of the flow path for the water. The covers 12 can be mounted at the end of the pipes, but can also be braze welded thereto to constitute a single block.

By modifying the conformation of the labyrinth, it is possible consequently to modify the path 9 in a very simple manner.

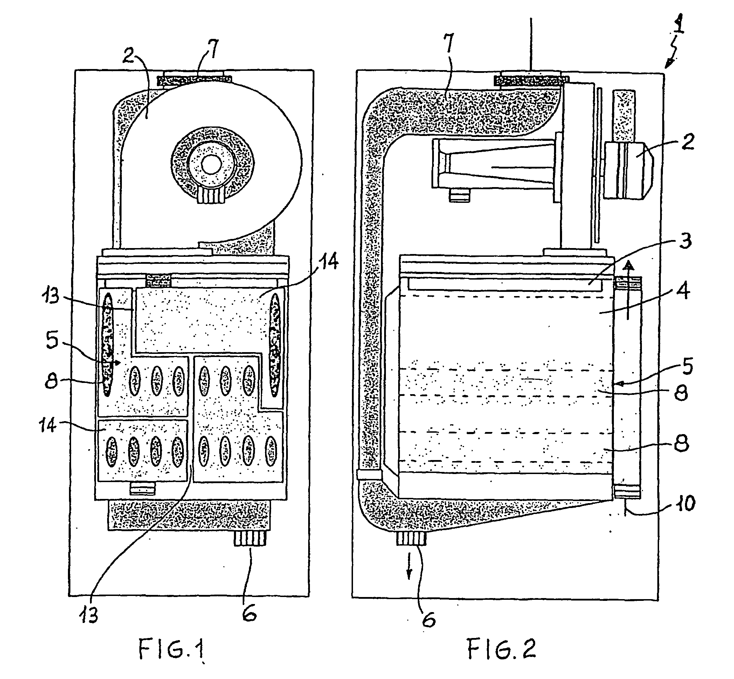

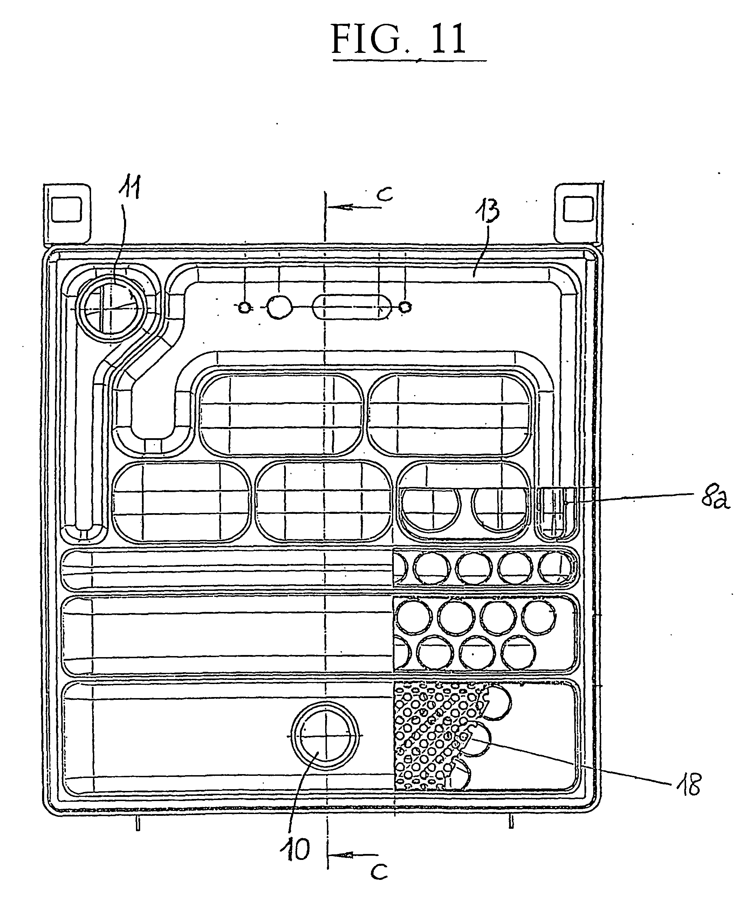

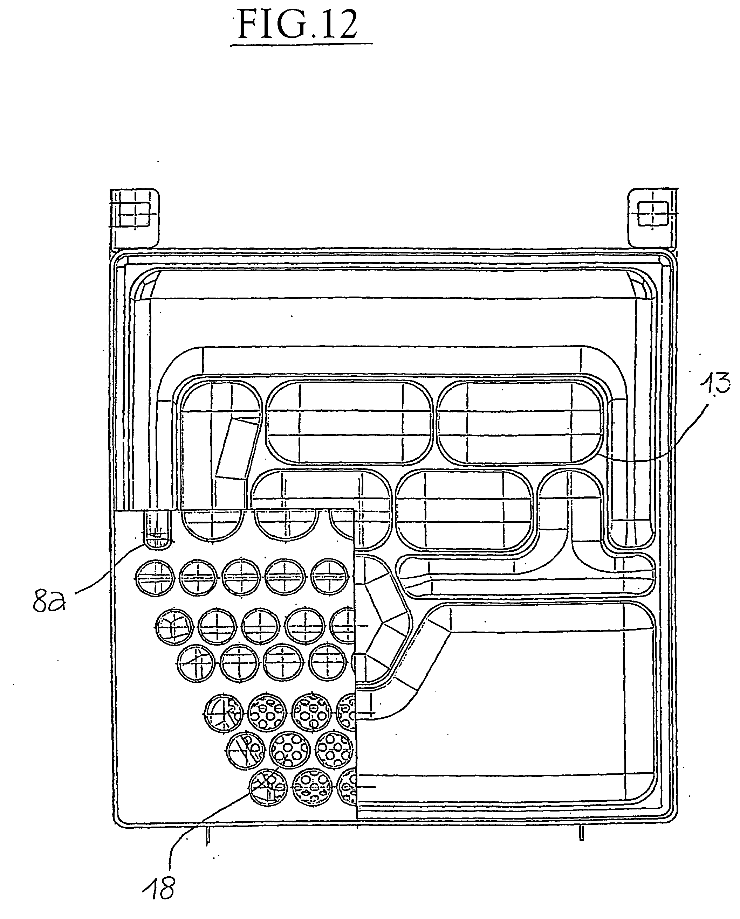

Figure 1 shows a possible configuration of the dividing walls 13 and of the respective connecting chambers 14, to obtain a predetermined path, for instance of the kind shown in Figure 3 or according to the configuration shown in Figures 3 and 4, whilst Figures 11, 12 and 13 show an embodiment variation in which the heat exchanger has substantially rectangular, instead of six-sided, cross section.

The pipes 8 advantageously comprise a plurality of fins 15 to improve the exchange of heat between fumes and water. Said fins 15 are advantageously brazed on the respective pipes 8, or braze welded, or welded with laser welding or TIG welding (with tungsten electrode).

The fins 15 have a thickness of 0.5 - 2 mm and a pitch of 2.5 - 4 mm, the term "pitch" meaning the distance between two contiguous fins.

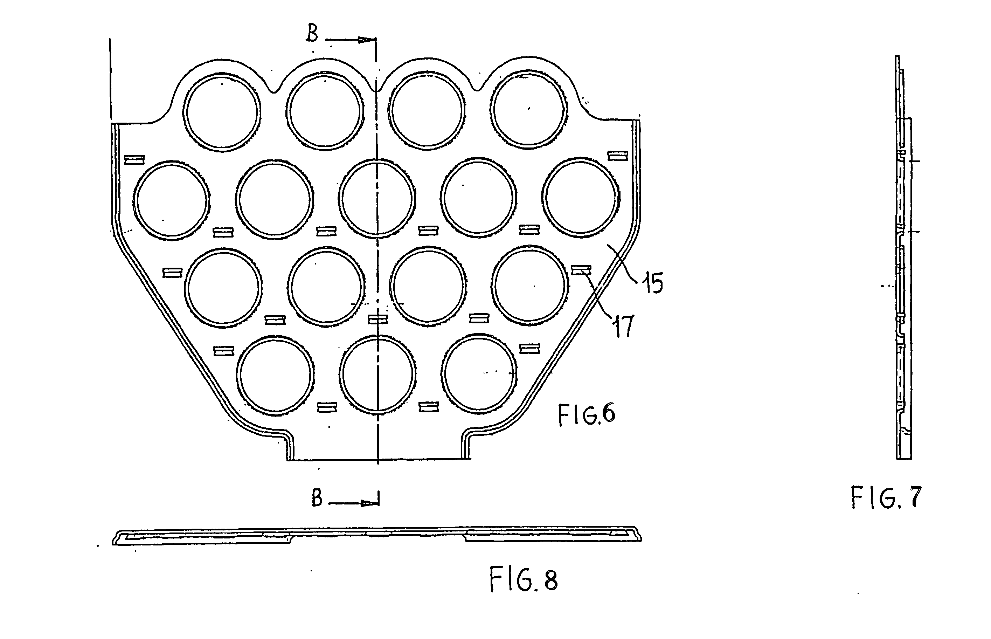

The configuration of a single fin is shown in greater definition in Figures 6, 7 and 8, which clearly show that there is a single fin incorporating a plurality of pipes.

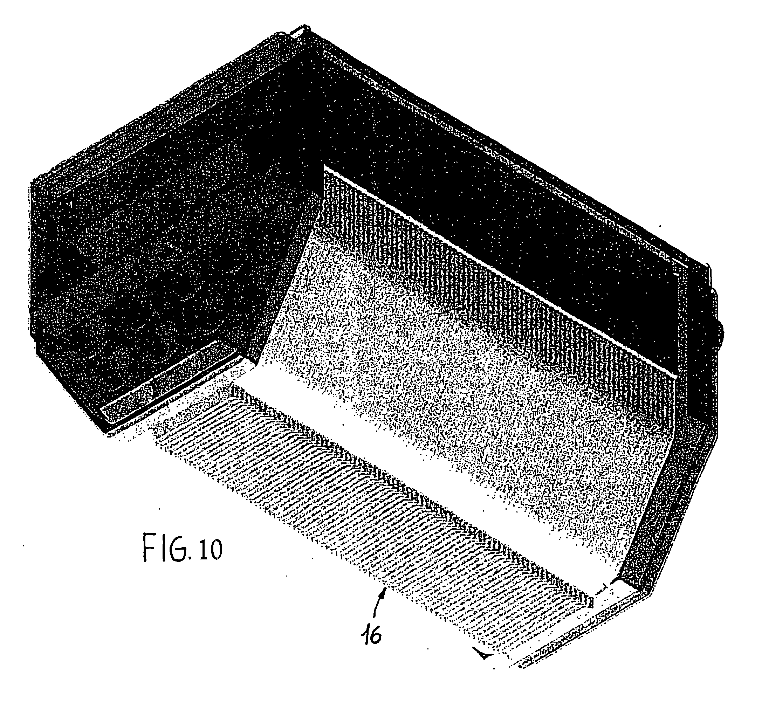

Said fin "opens" downwards in such a way that the succession of fins forms a protuberance 16 (shown in Figure 10) whereto can easily be applied a fume collection hood, not shown, connected with the stack 7.

The fins can comprise spacers 17 having the function of facilitating assembly and to increase fume turbulence to keep the fumes adhering to the pipes and enhance the exchange of heat.

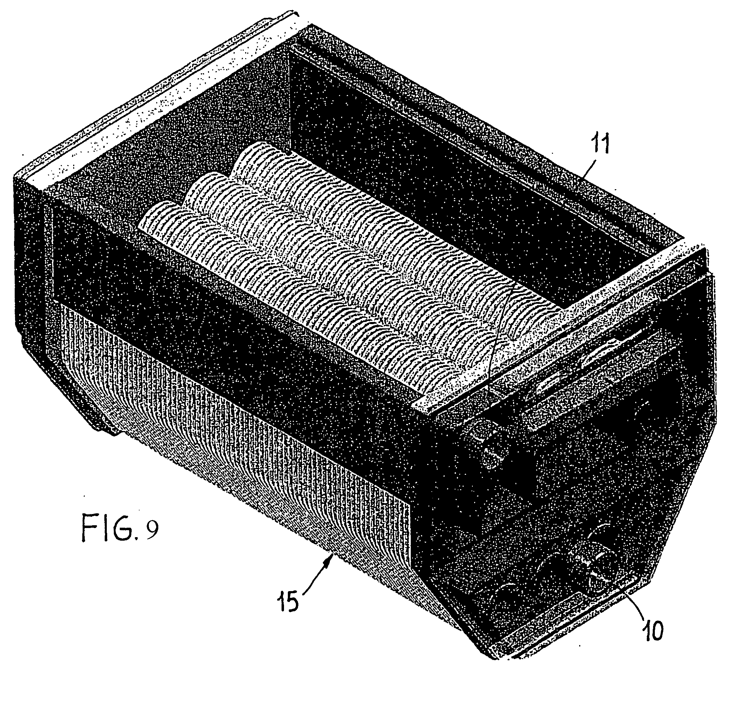

Originally the pipes 8 in the upper part comprise a pair of pipes 8a with rectangular or oval section which also constitute the upper lateral walls of the combustion chamber, as shown in Figures 9 and 10 whilst the lower part of the lateral walls is constituted by the fins 15 which are appropriately bent and brazed (or else welded) to form a continuous, closed lateral wall.

The pipes 8a are originally formed from the junction by welding (the weld lines are indicated as 8c and they are on the short sides of the rectangular cross section of the pipes, or in correspondence with the ends with smaller radius of curvature of the oval cross sections) of two sheet metal halves, each of which is provided with protuberances or recesses 8b which, when the two halves are mutually welded, are coupled and interact with the corresponding protuberances or recesses of the other half in order to stiffen the pipe 8a.

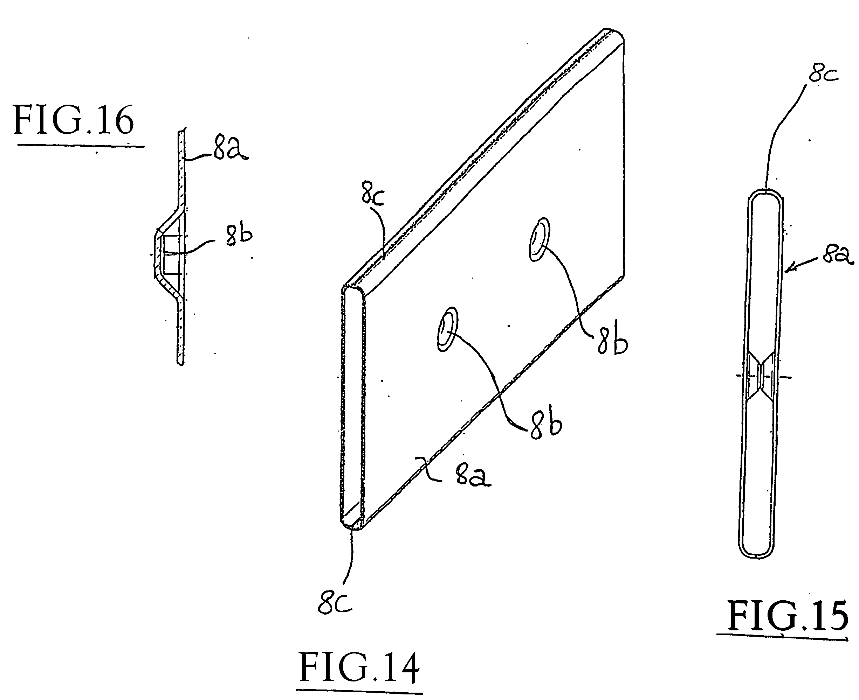

The protuberances or recesses 8a preferably have circular shape with isosceles trapezoidal section, as shown in Figure 16.

The pipes 8a of substantially rectangular or oval shape provided with protuberances or recesses allow, in an extremely simple and economical way, advantageously to replace the plurality of superposed circular pipes of prior art exchangers.

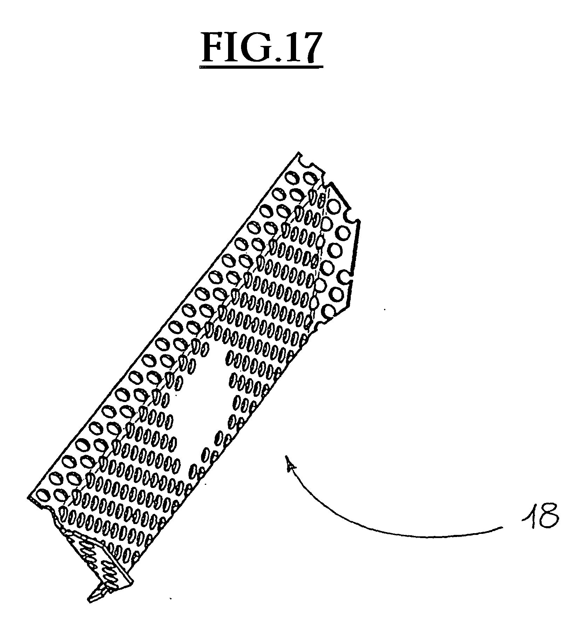

The reference number 18 indicates a diffuser, shown in detail in Figure 17, serving the purpose of improving heat exchange and shaped as a contoured sheet metal grid provided with holes distributed over its surface to obtain a better distribution of the internal flow. The operation of the boiler described above is as follows. The fan 2 generates the mixture of gas and air which is introduced into the burner 3. The fumes that are generated from combustion flow through the heat exchanger 5 and exhaust through the stack 7. Condensation is removed through the discharge 6.

In flowing through the heat exchanger 5, the fumes transfer heat to the water that follows the path along the pipes 8 (which may be finned), between the return section from the heating plant and the delivery section to the heating plant.

The original presence and conformation of the covers 12 allows to realise the path easily, quickly and without excessive bulk, further allowing to change it according to the different labyrinth adopted, i.e. of the disposition of the dividing walls 13 and of the respective connecting chambers 14.

The connecting chambers 14 further serve as front wall of the wet combustion chamber. For instance, two traditional heat exchangers can be used, each with its own block or set of pipes, and such heat exchangers can be substantially superposed and mutually connected by means of appropriate labyrinths in such a way, for instance, that the water return enters the lower heat exchanger and thence moves to the upper one, wherefrom it exits from the delivery conduit.

## Claims

1. Heat exchanger (5) for a condensing boiler (1) of the type comprising a plurality of pipes (8) defining a path (9) for the flow of the water between a return section (10) from a heating plant to a delivery section (11) to the plant, **characterised in that** it comprises:
a first single pipe (8a) having substantially rectangular or oval cross section and defining a first lateral wall of a combustion chamber;
a second single pipe (8a) opposite to the first pipe and having substantially rectangular or oval cross section and defining a second lateral wall of a combustion chamber, said second lateral wall being opposite to the first lateral wall.

2. Heat exchanger as claimed in claim 1, wherein said pipes (8a) are obtainable by welding two symmetrical halves in correspondence with the short sides of the rectangular section or of the lower radii of curvature of the oval section.

3. Heat exchanger as claimed in claim 1, wherein said pipes (8a) are provided with stiffening protuberances or recesses (8b).

4. Heat exchanger as claimed in claim 3, wherein the protuberances or recesses (8b) have circular shape and isosceles trapezoidal section.

5. Heat exchanger as claimed in claim 1, **characterised in that** it comprises a diffuser (18) obtained by means of a contoured and holed grid.

6. Heat exchanger as claimed in claim 1, **characterised in that** it comprises at least two covers (12) mounted at the end of the plurality of pipes (8) and provided internally with dividing walls (13) which realise connecting chambers (14) between the pipes (8) and define the conformation of the path (9) for the flow of the water.

7. Heat exchanger as claimed in claim 6, wherein the connecting chambers (14) are shaped in such a way as to serve also the function of front wall of a wet combustion chamber.

8. Heat exchanger as claimed in claim 1, wherein the plurality of pipes (8) is distributed in two superposed blocks.

9. Heat exchanger as claimed in claim 1, wherein a wet combustion chamber (4), surrounded by the water of the heating plant, is provided.

10. Heat exchanger as claimed in any of the previous claims, wherein the pipes (8) are associated with fins (15) to improve the heat exchange between fumes and water.

11. Heat exchanger as claimed in any of the previous claims, wherein the pipes (8) are made of pure aluminium and have a thickness of 0.8 - 2 mm

12. Heat exchanger as claimed in claim 10, wherein the fins (15) are brazed or braze welded or welded on the respective pipes (8).

13. Heat exchanger as claimed in claim 10, wherein each fin (15) is so shaped as mutually to connect, encompassing them, a plurality of pipes (8).

14. Heat exchanger as claimed in claim 13, wherein each fin has a thickness of about 0.5 - 2 mm and the distance between two contiguous fins or pitch of the fins is about 2.5 - 4 mm.

15. Heat exchanger as claimed in claim 10, wherein the fins (15) are so shaped as to define a lower protuberance (17) whereto is applied a hood for fume collection.

16. Heat exchanger as claimed in claim 10, wherein the fins (15) are bent and brazed to form a lateral wall of the heat exchanger.

17. Heat exchanger as claimed in claim 10, wherein the fins (15) are provided with spacers (17) so shaped as to increase fume turbulence to keep the fumes adhering to the pipes (8) and enhance the exchange of heat.

18. Condensation boiler (1) **characterised in that** it comprises a heat exchanger (5) as claimed in any of the previous claims.

## Patentansprüche

1. Wärmetauscher (5) für einen Brennwertkessel (1) der Art umfassend eine Vielzahl von Rohren (8), die einen Wasserströmungsweg (9) zwischen einem Rücklaufbereich (10) von einer Heizungsanlage zu einem Abgabebereich (11) der Anlage bilden, **dadurch gekennzeichnet dass** er umfasst:
ein erstes im Querschnitt im wesentlichen rechteckig oder oval ausgebildetes einzelnes, eine erste Seitenwand einer Brennkammer bildendes Rohr (8a);
ein zweites, dem ersten Rohr gegenüberliegendes einzelnes Rohr (8a), das im Querschnitt im wesentlichen rechteckig oder oval ausgebildet ist und eine zweite Seitenwand einer Brennkammer bildet, wobei die genannte zweite Seitenwand der ersten Seitenwand gegenüberliegt.

2. Wärmetauscher nach Anspruch 1, bei dem die genannten Rohre (8a) durch Verschweissen von zwei symmetrischen Hälften an den kurzen Seiten des rechteckigen Querschnitts oder den kleineren Krümmungsradien des ovalen Querschnitts herstellbar sind.

3. Wärmetauscher nach Anspruch 1, bei dem die genannten Rohre (8a) Vorsprünge oder Vertiefungen (8b) zur Versteifung aufweisen.

4. Wärmetauscher nach Anspruch 3, bei dem die Vorsprünge oder Vertiefungen (8b) kreisförmig sind und einen gleichschenkligen trapezförmigen Querschnitt aufweisen.

5. Wärmetauscher nach Anspruch 1, **dadurch gekennzeichnet, dass** er einen aus einem geformten Lochgitter bestehenden Diffusor (18) umfasst.

6. Wärmetauscher nach Anspruch 1, **dadurch gekennzeichnet, dass** er mindestens zwei am Ende der Vielzahl von Rohren (8) angebrachte Deckel (12) umfasst, die auf der Innenseite Verbindungskammern (14) zwischen den Rohren (8) bildende und die Ausbildung des Wasserströmungswegs (9) bestimmende Trennwände (13) aufweisen.

7. Wärmetauscher nach Anspruch 6, bei dem die Verbindungskammern (14) so geformt sind, dass sie ferner die Funktion der Vorderwand einer nassen Brennkammer übernehmen.

8. Wärmetauscher nach Anspruch 1, bei dem die Vielzahl von Rohren (8) auf zwei übereinander angeordnete Blöcke verteilt ist.

9. Wärmetauscher nach Anspruch 1, bei dem eine vom Wasser der Heizungsanlage umgebene nasse Brennkammer (4) vorgesehen ist.

10. Wärmetauscher nach einem der vorhergehenden Ansprüche, bei dem den Rohren (8) Rippen (15) zur Verbesserung des Wärmeaustauschs zwischen Rauchgas und Wasser zugeordnet sind.

11. wärmetauscher nach einem der vorhergehenden Ansprüche, bei dem die Rohre (8) aus reinem Aluminium bestehen und eine Stärke von 0,8- 2 mm aufweisen.

12. Wärmetauscher nach Anspruch 10, bei dem die Rippen (15) an die entsprechenden Rohre (8) gelötet oder schweissgelötet oder geschweisst sind.

13. Wärmetauscher nach Anspruch 10, bei dem die einzelnen Rippen (15) so ausgebildet sind, dass sie eine Vielzahl von Rohren (8) miteinander verbinden, wobei sie diese umgeben.

14. wärmetauscher nach Anspruch 13, bei dem die Rippen jeweils eine Stärke von etwa 0,5-2 mm aufweisen und der Abstand zwischen zwei benachbarten Rippen oder die Rippenteilung bei etwa 2,5-4 mm liegt.

15. Wärmetauscher nach Anspruch 10, bei dem die Rippen (15) so ausgebildet sind, dass sie einen unteren Vorsprung (17) bilden, an dem eine Rauchhaube angesetzt ist.

16. Wärmetauscher nach Anspruch 10, bei dem die Rippen (15) zur Bildung einer Seitenwand des Wärmetauschers gebogen und gelötet sind.

17. Wärmetauscher nach Anspruch 10, bei dem die Rippen (15) so ausgebildete Abstandselemente (17) aufweisen, dass diese die Rauchgasverwirbelung erhöhen, damit das Rauchgas an den Rohren (8) entlangstreicht und der Wärmeaustausch erhöht wird.

18. Brennwertkessel (1) **dadurch gekennzeichnet dass** er einen Wärmetauscher (5) nach einem der vorhergehenden Ansprüche umfasst.

## Revendications

1. Echangeur de chaleur (5) pour une chaudière à condensation (1) du type comprenant une pluralité de tubes (8) définissant un parcours (9) pour le flux d'eau entre une section de retour (10) d'une installation de chauffe et une section d'alimentation (11) de l'installation elle-même, **caractérisé en ce qu'**il comprend:
un premier tube (8a) ayant une section transversale substantiellement rectangulaire ou ovale et définissant une première paroi latérale de la chambre de combustion;
un second tube (8a) opposé au premier et ayant une section transversale substantiellement rectangulaire ou ovale et définissant une seconde paroi latérale d'une chambre de combustion, ladite seconde paroi latérale étant opposée à la première paroi latérale.

2. Echangeur de chaleur selon la revendication 1, dans lequel lesdits tubes (8a) peuvent être obtenus par soudure de deux moitiés symétriques en correspondance des côtés courts de la section rectangulaire ou des rayons de courbure inférieurs de la section ovale.

3. Echangeur de chaleur selon la revendication 1, dans lequel lesdits tubes (8a) sont pourvus de protubérances ou renfoncements de renfort (8b).

4. Echangeur de chaleur selon la revendication 3, dans lequel les protubérances ou renfoncements (8b) ont des formes circulaires et des sections en trapèze isocèle.

5. Echangeur de chaleur selon la revendication 1, **caractérisé en ce qu'**il comprend un diffuseur (18) obtenu au moyen d'une grille découpée et perforée.

6. Echangeur de chaleur selon la revendication 1, **caractérisé en ce qu'**il comprend au moins deux couvercles (12) montés sur l'extrémité de la pluralité de tubes (8) et pourvus intérieurement de parois séparatrices (13) qui réalisent des chambres de connexion (14) entre les tubes (8) et définissent la conformation du parcours (9) du flux d'eau.

7. Echangeur de chaleur selon la revendication 6, dans lequel les chambres de connexion (14) sont conformées de manière à remplir également la fonction de paroi frontale d'une chambre de combustion à bain d'eau.

8. Echangeur de chaleur selon la revendication 1, dans lequel la pluralité de tubes (8) est distribuée en deux blocs superposés.

9. Echangeur de chaleur selon la revendication 1, dans lequel une chambre de combustion à bain d'eau (4), entourée par l'eau de l'installation de chauffe, est prévue.

10. Echangeur de chaleur selon n'importe laquelle des revendications précédentes, dans lequel les tubes (8) sont associés à des ailettes (15) pour améliorer l'échange de chaleur entre les fumées et l'eau.

11. Echangeur de chaleur selon n'importe laquelle des revendications précédentes, dans lequel les tubes (8) sont réalisés en pur aluminium et présentent une épaisseur de 0,8-2 mm.

12. Echangeur de chaleur selon la revendication 10, dans lequel les ailettes (15) sont brasées, soudobrasées ou soudées sur les tubes (8) respectifs.

13. Echangeur de chaleur selon la revendication 10, dans lequel chaque ailette (15) est conformée de manière à connecter mutuellement, en les englobant, une pluralité de tubes (8).

14. Echangeur de chaleur selon la revendication 13, dans lequel chaque ailette présente une épaisseur d'environ 0,5-2 mm et la distance entre deux ailettes contiguës ou pas des ailettes est d'environ 2,5-4 mm.

15. Echangeur de chaleur selon la revendication 10, dans lequel les ailettes (15) sont conformées de manière à définir une protubérance inférieure (17) à laquelle est appliquée une hotte pour la collecte des fumées.

16. Echangeur de chaleur selon la revendication 10, dans lequel les ailettes (15) sont repliées et brasées pour former une paroi latérale de l'échangeur de chaleur.

17. Echangeur de chaleur selon la revendication 10, dans lequel les ailettes (15) sont pourvues d'éléments d'écartement (17) conformés de manière à augmenter la turbulence des fumées pour les maintenir adhérentes aux tubes (8) et augmenter l'échange de chaleur.

18. Chaudière à condensation (1) **caractérisée en ce qu'**elle comprend un échangeur de chaleur (5) selon n'importe laquelle des revendications précédentes.
